# EUROPEAN PATENT APPLICATION

(11) **EP 4 756 901 A1**
(43) Date of publication of application: **10.06.2026**
(21) Application number: 25220696.6
(22) Date of filing: 04.12.2025
(51) Int. Cl.: H01M 4/134, H01M 4/1395, H01M 4/38, H01M 4/62, H01M 10/0525

(54) **NEGATIVE ELECTRODE FOR RECHARGEABLE LITHIUM BATTERY AND RECHARGEABLE LITHIUM BATTERY INCLUDING SAME**

(30) Priority: 09.12.2024 KR 20240181836
(71) Applicant: SAMSUNG SDI CO., LTD., Yongin-si, Gyeonggi-do 17084 (KR)
(72) Inventor: CHO, Yunshik, 17084 Yongin-si, Gyeonggi-do (KR); JEON, Ju-Won, 02721 Seoul, Seongbuk-gu (KR); DO, Young Rag, 05572 Seoul, Songpa-gu (KR)
(74) Representative: Meissner Bolte Partnerschaft mbB

(57) **Abstract**

Disclosed are a negative electrode for a rechargeable lithium battery, and a rechargeable lithium battery including the negative electrode. The negative electrode includes a negative electrode active material layer including a negative electrode active material, an additive, and a binder. The additive includes MOH (wherein M is or includes an alkali metal), a polymer comprising a R-O repeating unit (wherein R is or includes a substituted or unsubstituted alkylene group, or phenylene group), and an ammonium group-including cation polymer at a weight ratio in a range of about 1:about 0.4 to about 1.5: about 0.4 to about 1.5.

## Description

### BACKGROUND

### (a) Field

This disclosure relates to a negative electrode for a rechargeable lithium battery, and a rechargeable lithium battery including the negative electrode.

### (b) Description of the Related Art

The increasing presence of electronic devices such as, e.g., mobile phones, laptop computers, electric vehicles, and the like, using batteries is driving an increase in demand for rechargeable batteries with relatively high capacity and lighter weight. Particularly, a rechargeable lithium battery has drawn attention as a driving power source for portable devices, as the rechargeable lithium battery has lighter weight and high energy density. Accordingly, improving the performance of rechargeable lithium batteries may be advantageous.

Rechargeable lithium batteries include a positive electrode and a negative electrode including an active material capable of intercalating and deintercalating lithium ions, and an electrolyte solution, and generate electrical energy through oxidation and reduction reactions when lithium ions are intercalated and deintercalated from the positive electrode and the negative electrode.

### SUMMARY

The present invention is directed to a negative electrode for a rechargeable lithium battery that exhibits both improved capacity and cycle-life characteristics.

The present invention is further directed to a rechargeable lithium battery including the negative electrode.

The inventive negative electrode includes a negative electrode active material layer including a negative electrode active material, an additive, and a binder, wherein the additive comprises MOH (wherein M is or includes an alkali metal), a polymer comprising a R-O repeating unit (wherein R is or includes a substituted or unsubstituted alkylene group, or phenylene group), and an ammonium group-including cation polymer at a weight ratio in a range of about 1:about 0.4 to about 1.5: about 0.4 to about 1.5.

The inventive rechargeable lithium battery includes the negative electrode, a positive electrode, and an electrolyte.

A negative electrode according to the invention may exhibit desired or improved cycle-life characteristic and desired or improved high-rate charging and discharging characteristics.

### BRIEF DESCRIPTION OF THE DRAWINGS

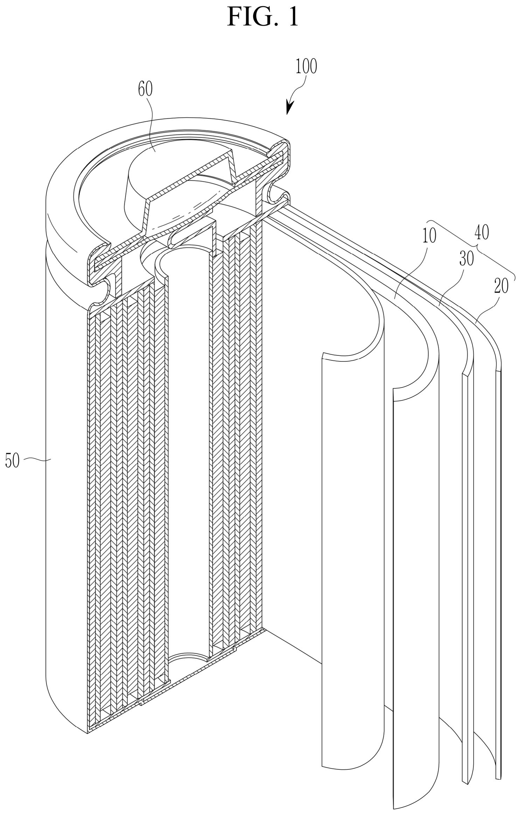

FIG. 1 to FIG. 4 are a cross-sectional view schematically showing rechargeable lithium batteries according to some example embodiment.

### DETAILED DESCRIPTION

Hereinafter, example embodiments are described in detail. However, these embodiments are merely examples, the present disclosure is not limited thereto, and the present disclosure is defined by the scope of claims.

As used herein, when a specific definition is not otherwise provided, It is understood that when an element such as a layer, film, region, or substrate is referred to as being "on" another element, the element may be directly on the other element, or intervening elements may also be present therebetween.

Unless otherwise specified in this specification, what is indicated in the singular may also include the plural. In addition, unless otherwise specified, "A or B" may mean "including A, including B, or including A and B."

As used herein, "combination thereof" may refer to a mixture, a laminate, a composite, a copolymer, an alloy, a blend, a reaction product, and the like of the constituents.

As used herein, when a definition is not otherwise provided, the particle diameter may be an average particle diameter. In addition, the particle diameter may refer to an average particle diameter (D₅₀), which indicates the diameter of particles having a cumulative volume of 50 volume% in the particle size distribution. The average particle size (D₅₀) may be measured by methods known to those skilled in the art, for example, by using a particle size analyzer, or by measuring using a transmission electron microscope (TEM) or a scanning electron microscope (SEM). In some example embodiments, a dynamic lightscattering measurement device is used to perform a data analysis, and the number of particles is counted for each particle size range. From this, the average particle diameter (D₅₀) value may be easily obtained through a calculation. In some example embodiments, it can be measured using a laser diffraction method. When measuring by the laser diffraction method, for example, the particles to be measured are dispersed in a dispersion medium, and then introduced into a commercially available laser diffraction particle diameter measuring device (e.g., Microtrac MT 3000), and ultrasonic waves of about 28 kHz with an output of 60 W are irradiated to calculate an average particle diameter (D₅₀) on the basis of 50% of the particle diameter distribution in the measuring device.

In some example embodiments, the average particle diameter may be measured by various methods described above, for example, through a particle size analyzer.

In some example embodiments, the thickness may be measured using an SEM or TEM image of a cross-section, but the present disclosure is not limited thereto, and the thickness may be measured using any method that can measure thickness in the relevant field. The thickness may be an average thickness.

As used herein, soft carbon refers to a graphitizable carbon material that may be graphitized by heat treatment at high temperatures, for example 2800 °C, and hard carbon refers to non-graphitizable carbon material that is not graphitized by heat treatment. The soft carbon and hard carbon are known in the art.

In some example embodiments, crystalline carbon and amorphous carbon can be classified by X-ray diffraction analysis. The crystalline carbon includes natural graphite and artificial graphite. The natural graphite refers to naturally occurring graphite obtained by separation from minerals, and having, upon X-ray diffraction analysis, d002 of about 3.350 Å to about 3.360 Å. The artificial graphite refers to graphite made by graphitization and having, upon X-ray diffraction analysis, d002 of about 3.355 Å to about 3.365 Å. The amorphous carbon has a d002 of less than or equal to about 3.34 Å when analyzed by X-ray diffraction. The X-ray diffraction analysis (XRD) uses CuKα ray as a target line and uses an X-ray diffraction analyzer, for example, X'Pert (manufacturer: Malvern Panalytical), and to improve peak intensity resolution, the monochromator equipment may be removed and measured. The measurement conditions may be 2θ=10 ° to 80 °, scan rate (°/s) = 0.044 to 0.089, and step size (°/step) = 0.013 to 0.039.

In some example embodiments, the weight average molecular weight can be measured by, e.g., gel permeation chromatography.

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

A negative electrode for a rechargeable lithium battery according to the invention includes a negative electrode active material layer including a negative electrode active material, an additive, and a binder. The additive includes MOH (wherein M is or includes an alkali metal), a polymer including a R-O repeating unit (wherein R is or includes a substituted or unsubstituted alkylene group, or a phenylene group), and an ammonium group-including cation polymer at a weight ratio in a range of about 1:about 0.4 to about 1.5: about 0.4 to about 1.5.

In one or more example embodiments, the weight ratio of the MOH, the polymer including the R-O repeating unit, and the ammonium group-including cation polymer may be in a range of about 1:about 0.4 to about 1.2:about 0.4 to about1.2.

When the weight ratio the MOH, the polymer including the R-O repeating unit, and the ammonium group-including cation polymer is within the above range, the processability of the negative electrode active material layer slurry and the negative electrode preparations may be secured.

In the MOH, M is or includes an alkali metal and may be or include Li, Na, or a combination thereof. For example, the MOH may be or include LiOH, NaOH, or a combination thereof.

In the polymer including the R-O repeating unit, the R may be or include a substituted or unsubstituted alkylene group, or a phenylene group. The alkylene group may be or include a C2 to C30 alkylene group. In the substituted alkylene group, the substituent may be or include halogen or an unsubstituted C1 to C5 alkylene group.

In one or more example embodiments, the polymer including the R-O repeating unit may be represented by Chemical Formula 1 below. 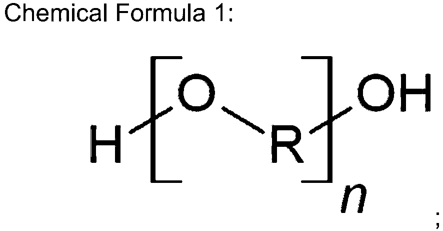 wherein R is or includes a substituted or unsubstituted alkylene group, or a phenylene group and n is an integer in a range of about 1 to about 200000.

In one or more example embodiments, the polymer including the R-O repeating unit may be or include at least one of polyethylene oxide, polypropylene oxide, polyphenylene oxide, or a combination thereof.

The ammonium group-including cation polymer may be or include at least one of polyethylene imine, poly(diallyldimethylammonium chloride), poly(allylamine hydrochloride), poly (4-vinylbenzyltrimethylammonium)chloride, or a combination thereof.

The additive may be neutral or a weakly basic, and may, for example, have a pH in the range of about 5 to about 9. Since the additive exhibits basicity, the additive may address the problem of a viscosity reduction and processability degradation resulting from the acidity of the slurry type composition (negative electrode composition).

In one or more example embodiments, an amount of the additive may be in a range of about 0.1 wt% or more, about 1 wt% or less, or about 0.3 wt% to about 0.7 wt% based on 100 wt% of the negative electrode active material layer. When the amount the additive satisfies in the above range, the viscosity of the negative electrode composition may be maintained as desired, and the adhesive strength of the negative electrode active material layer to the current collector may be improved. The occurrence of the negative electrode crack may be reduced or suppressed, and the separation of the negative electrode active material during full-charging may be effectively reduced or suppressed.

In one or more example embodiments, the binder may be or include a self-healing binder, an aqueous binder, a non-aqueous binder, or a combination thereof. In another example embodiment, the binder may be or include the self-healing binder, or may be the self-healing binder and the aqueous binder.

The effects of the additive according to one or more example embodiments may be improved or maximized when used in combination with the self-healing binder, and thus, it may be suitable that the binder includes the self-healing binder. The use of the self-healing binder and the aqueous binder may enhance the stability of the negative electrode slurry during the preparation thereof, thereby ensuring improved processability.

The self-healing binder includes a copolymer including a polymer electrolyte, a conductive polymer, and a polydentate chelating agent. The self-healing binder may be or include a copolymer in which the polymer electrolyte, the conductive polymer, and the polydentate chelating agent are polymerized, and when the self-healing binder includes all three components, a desired self-healing effect, such as effectively reducing or suppressing deterioration in cycle-life characteristics caused by volume expansion during charging and discharging may be achieved, and the cycle-life characteristic may thus be enhanced. When any of the polymer electrolyte, the conductive polymer, and the polydentate chelating agent is not included, the desired self-healing effect may not be obtained.

Since the self-healing binder exhibits acidity, the negative electrode composition including the binder also exhibit acidity, which may lead to a decrease in viscosity and deterioration in the processability of negative electrode preparation. Such problems may be reduced or prevented by utilizing the self-healing binder in combination with the additive according to one or more example embodiments in the negative electrode composition. For example, acidification of the negative electrode composition caused by the utilization of the self-healing binder may be neutralized by adding the basic additive, thereby effectively reducing or preventing the drawbacks associated with the acidity.

In one or more example embodiments, the polymer electrolyte may be or include a polymer electrolyte having at least one functional group such as or including at least one of a carbonyl group, an undissociated functional group (RH), a carboxylic acid group, a sulfonic acid group, a phosphoric acid group, an ether group, and an amine group. The undissociated functional group (RH) may be or include at least one of a carboxylic acid group, a sulfonic acid group, or a phosphoric acid group. Non-limiting examples of the polymer electrolyte may be or include at least one of poly(2-acrylamido-2-methyl-1-propanesulfonic acid), polyacrylic acid, poly(meth)acrylic acid, or a combination thereof. In one or more example embodiments, the (meth)acrylic acid may refer to acrylic acid or methacrylic acid.

In one example embodiment, the conductive polymer may be or include at least one of poly(3,4-ethylenedioxythiophene, PEDOT), polyaniline, polypyrrole, polyfuran, polythiophene, polyselenophene, 3,4-propylenedioxythiophene-2,5-dicarboxylic acid (ProDOT), or a combination thereof.

In one or more example embodiments, the polydentate chelating agent may have 2 to 6 acidic functional groups or basic functional groups, and the acidic functional group or the basic functional group may be or include at least one of a carboxylic acid group (-COOH), a sulfonic acid group, an amine group, a phosphoric acid group (-PO₃H₂), or a hydroxy group(-OH). Non-limiting examples of the polydentate chelating agent may be phytic acid, tannic acid, or a combination thereof.

In the self-healing binder, an amount of the polymer electrolyte may be about 30 wt% to about 95 wt%, about 30 wt% to about 80 wt%, or about 30 wt% to about 70 wt% based on 100 wt% of the self-healing binder. When the amount of the polymer electrolyte is within the range, the desired or improved negative electrode processability may be obtained, and the dispersibility of the slurry for preparing the negative electrode may be desired or improved, and high adhesive strength of the negative electrode may be achieved.

In the self-healing binder, an amount of the conductive polymer may be in a range of about 2 wt% to about 60 wt%, about 2 wt% to about 40 wt%, or about 10 wt% to about 40 wt% based on 100 wt% of the self-healing binder. The amount of the conductive polymer within the above range improves the conductivity of the negative electrode.

In the self-healing binder, an amount of the polydentate chelating agent may be in a range of about 3 wt% to about 68 wt%, about 5 wt% to about 25 wt%, or about 15 wt% to about 40 wt% based on 100 wt% of the self-healing binder. When the amount of the polydentate chelating agent is within the above range, the self-healing performance of the negative electrode may be further improved.

The self-healing binder according to one or more example embodiment may be or include a copolymer in which a polymer electrolyte, a conductive polymer, and a polydentate chelating agent may be polymerized, and a weightaverage molecular weight (Mw) of the copolymer is not limited, but for example, may be in a range of about 5000 g/mol to about 100,000,000 g/mol.

In one or more example embodiments, the self-healing binder may be prepared by polymerizing the polymer electrolyte, the conductive polymer, and the polydentate chelating agent, and the polymerization may be a radical polymerization, but is not limited thereto. The polymerization technique may be any techniques as long as a copolymer may be prepared. In the polymerization, an initiator may be or include at least one of ammonium persulfate, sodium persulfate, potassium persulfate, 2,2-azobis-(2-amidinopropane)dihydrochloride, 2,2-azobis-(N,N-dimethylene)isobutyramidine dihydrochloride, 2-(carbamoylazo)isobutyronitrile, 2,2-azobis2-(2-imidazoline-2-yl)propane: dihydrochloride, and 4,4-azobis-(4-cyanovaleric acid), or a combination thereof, but is not limited thereto.

The aqueous binder may be or include at least one of a styrene-butadiene rubber (SBR), an acrylated styrene-butadiene rubber (ABR), an acrylonitrilebutadiene rubber, an acryl rubber, a butyl rubber, a fluorine rubber, or a combination thereof.

The non-aqueous binder may be or include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

In one or more example embodiments, an amount of the binder may be in a range of about 0.5 wt% to about 10 wt%, about 1 wt% to about 5 wt%, or about 3 wt% to about 5 wt% based on 100 wt% of the negative electrode active material layer. When an amount of the binder is within the above range, capacity retention may be enhanced and capacity may be further increased. For example, the binder is the self-healing binder and the amount thereof is satisfied in the range, the self-healing effect, that is, the effect for self-recovering the cracks of the negative electrode caused by charging and discharging, may be effectively obtained.

When the binder is or includes the self-healing binder and the aqueous binder, a mixing ratio of the self-healing binder and the aqueous binder may be a weight ratio in a range of about 1:10 to about 10:1, or a weight ratio of about 2:8 to about 8:2. When the mixing ratio of the self-healing binder and the aqueous binder is within the above range, the processability of the negative electrode slurry and the negative electrode preparations may be enhanced.

In one or more example embodiments, the negative electrode active material layer may further include a cellulose-based compound. The cellulose-based compound may be or include at least one of carboxymethyl cellulose, hydroxypropyl methyl cellulose, methyl cellulose, or an alkali metal salt thereof. The alkali metal may be or include at least one of Na, K, or Li.

An amount of the cellulose-based compound may be in a range of about 0.5 wt% to about 10 wt%, about 0.7 wt% to about 8 wt%, or about 1 to about 6 wt% based on 100 wt% of the negative electrode active material layer. When the amount of the cellulose-based compound falls within the above range, the dispersion of the active material and the conductive material may be improved, and the flexibility and adhesion of the negative electrode may be ensured.

In one or more example embodiments, the negative electrode active material may be or include a silicon-based negative electrode active material. The effects derived from utilizing the binders may be more effectively realized when the binders are applied to the silicon-based negative electrode active material, rather than carbon-based active material. Although the silicon-based negative electrode active material may improve the current density and high capacity of the battery, the silicon-based negative electrode active material may experience a severe volume expansion during charging and discharging, which may cause the generation of cracks in the negative electrode active material layer. The self-healing binder may effectively hinder or inhibit generation of cracks, and may form a uniform negative electrode active material layer when utilized together with the cellulose-based compound and the aqueous binder.

In one or more example embodiments, the silicon-based negative electrode active material may be or include at least one of silicon, silicon oxide (SiOₓ, 0<x≤2), or a silicon-carbon composite including silicon and carbon.

The silicon-carbon composite may be or include a composite of silicon and carbon. The carbon may include amorphous carbon, or amorphous carbon and crystalline carbon. The crystalline carbon may be of unspecified-shaped, plate-shaped, flake-shaped, spherical-shaped, or fiber-shaped natural graphite, artificial graphite, or a combination thereof. The amorphous carbon may be or include at least one of soft carbon, hard carbon, mesophase pitch carbide, sintered cokes, or a combination thereof.

The silicon-carbon composite may be in the form of silicon particles and amorphous carbon coated on the surface of the silicon particles. For example, the silicon-carbon composite may include silicon particles and an amorphous carbon coating layer on the surface of the silicon particle. In another example embodiments, the silicon-carbon composite may include a secondary particle (core) in which silicon primary particles are aggregated, and an amorphous carbon coating layer (shell) on the surface of the secondary particle. The amorphous carbon may also be between the silicon primary particles, and, for example, the silicon primary particles may be coated with the amorphous carbon. For example, the secondary particles may be dispersed in an amorphous carbon matrix. The silicon primary particles may be or include nano silicon particles. An average particle diameter of the nano silicon particles may be in a range of about 10 nm to about 900 nm, about 10 nm to about 800 nm, about 10 nm to about 500 nm, about 10 nm to about 300 nm, or about 10 nm to about 200 nm. When the average particle diameter of the nano silicon particles is within the above range, excessive volume expansion that occurs during charging and discharging may be reduced or suppressed, and disconnection of the conductive path due to particle crushing during charging and discharging can be reduced or prevented. In one or more example embodiments, the particle size of the silicon secondary particles may not be limited.

A thickness of the amorphous carbon coating layer may be controlled as desired, but may be, for example, in a range of about 2 nm to about 800 nm, about 5 nm to about 600 nm, about 10 nm to about 400 nm, or about 20 nm to about 200 nm. The thickness of the amorphous carbon coating layer may be measured by SEM or TEM images of a cross-section of the silicon-carbon composite, but is not limited thereto, and any method capable of measuring the thickness of the amorphous carbon coating layer in the relevant field may be used.

The average particle size of the silicon-carbon composite may be suitably controlled, and may be, for example, less than or equal to about 30 µm, for example, about 1 µm to about 30 µm, about 2 µm to about 25 µm, about 3 µm to about 20 µm, or about 5 µm to about 15 µm.

Based on 100 wt% of the silicon-carbon composite, an amount of the silicon particles may be in a range of about 30 wt% to about 70 wt%, or about 40 wt% to about 65 wt%. The amount of the amorphous carbon may be in a range of about 30 wt% to about 70 wt%, or about 35 wt% to about 60 wt%, based on 100 wt% of the silicon-carbon composite. When the amount of the silicon particles and amorphous carbon satisfies the above range, higher capacity may be achieved.

In one or more example embodiments, the silicon-carbon composite may include a core including silicon particles and crystalline carbon, and an amorphous carbon coating layer on a surface of the core. For example, the silicon-carbon composite may include a core including secondary particles where silicon primary particles and crystalline carbon are aggregated, and an amorphous carbon coating layer on the core. The amorphous carbon may be located between silicon primary particles, or between crystalline carbon, so that amorphous carbon may be filled between silicon primary particles or crystalline carbon.

When the silicon-carbon composite includes silicon particles, crystalline carbon, and amorphous carbon, the amount of the crystalline carbon may be in a range of about 10 wt% to about 70 wt%, or about 20 wt% to about 60 wt%, based on a 100 wt% of the silicon particles, the amorphous carbon, and the crystalline carbon. The amount of the amorphous carbon may be in a range of about 20 wt% to about 40 wt%, or about 20 wt% to about 30 wt%, and the amount of the silicon particles may be about 10 wt% to about 70 wt%, or about 10 wt% to about 60 wt%.

In the negative electrode according to one or more example embodiments, as the negative electrode active material, a carbon-based negative electrode active material may be further included, together with the silicon-based negative electrode active material. When the silicon-based negative electrode active material is utilized together with the carbon-based negative electrode active material, a mixing ratio of the silicon-based negative electrode active material and the carbon-based negative electrode active material may be in a range of about 1:99 to about 99:1 weight ratio. In one or more example embodiments, a mixing ratio of the silicon-based negative electrode active material and the carbon-based negative electrode active material may be a weight ratio in a range of about 5:95 to about 20:80.

The crystalline carbon may be or include graphite such as unspecified-shaped, plate-shaped, flake-shaped, spherical-shaped, or fiber-shaped natural graphite or artificial graphite, and the amorphous carbon may be or include at least one of soft carbon, hard carbon, mesophase pitch carbide, sintered cokes, and/ or the like.

In the negative electrode active material layer, an amount of the negative electrode active material may be in a range of about 70 wt% to about 98 wt% based on 100 wt% of the negative electrode active material layer.

In one or more example embodiments, the negative electrode active material layer may further include a conductive material. When the negative electrode active material layer further includes the conductive material, in the negative electrode active material layer, an amount of the negative electrode active material may be in a range of about 70 wt% to about 99 wt% based on 100 wt% of the negative electrode active material layer, the sum of the additive and the binder, optionally, and the cellulose-based compound, may be in a range of about 0.6 wt% to about 21 wt% based on 100 wt% of the negative electrode active material layer, and the amount of the conductive material may be in a range of about 0.01 wt% to about 20 wt% based on the total, 100 wt% of the negative electrode active material layer.

The conductive material may be included to provide electrical conductivity for the negative electrode. Any electrically conductive material may be utilized as a conductive material unless the electrically conductive material causes a chemical change. Non-limiting examples of the conductive material may include a carbon-based material such as at least one of natural graphite, artificial graphite, carbon black, acetylene black, ketjen black, a carbon fiber, and the like, a metal-based material of a metal powder or a metal fiber including at least one of copper, nickel, aluminum, silver, and the like; a conductive polymer such as a polyphenylene derivative; or a mixture thereof.

In one or more example embodiment, the negative electrode includes a current collector supporting the negative electrode active material layer.

The current collector may include at least one of a copper foil, a nickel foil, a stainless steel foil, a titanium foil, a nickel foam, a copper foam, a polymer substrate coated with a conductive metal, and a combination thereof, but is not limited thereof.

### Rechargeable lithium battery:

Another example embodiment of the invention is a rechargeable lithium battery including the negative electrode, a positive electrode, and an electrolyte. Positive electrode:
The positive electrode includes a current collector and a positive electrode active material layer formed on the current collector. The positive electrode active material layer includes a positive electrode active material and may further include a binder and/or a conductive material.

For example, the positive electrode may further include an additive that may constitute a sacrificial positive electrode.

An amount of the positive electrode active material may be in a range of about 90 wt% to about 99.5 wt% based on 100 wt% of the positive electrode active material layer, and each amount of the binder and conductive material may be in a range of about 0.5 wt% to about 5 wt%, respectively, based on 100 wt% of the positive electrode active material layer.

The positive electrode active material may include lithiated intercalation compounds that reversibly intercalate and deintercalate lithium ions. In one or more example embodiments, one or more composite oxides of a metal such as or including at least one of cobalt, manganese, nickel, and a combination thereof, and lithium, may be used.

The composite oxide may be or include a lithium transition metal composite oxide, and examples thereof may include at least one of a lithium nickel-based oxide, a lithium cobalt-based oxide, a lithium manganese-based oxide, a lithium iron phosphate-based compound, a cobalt-free lithium nickelmanganese-based oxide, or a combination thereof.

As an example, a compound represented by any of the following chemical formulas may be used. LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GeO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li _{(3-f)}Fe₂(PO₄)₃ (0≤f≤2); LiₐFePO₄ (0.90≤a≤1.8).

In the above chemical formulas, A is or includes at least one of Ni, Co, Mn, or a combination thereof; X is or includes at least one of Al, Ni, Co, Mn, Cr, Fe, Mg, Sr, V, a rare earth element, or a combination thereof; D is or includes at least one of O, F, S, P, or a combination thereof; G is or includes at least one of Al, Cr, Mn, Fe, Mg, La, Ce, Sr, V, or a combination thereof; and L¹ is or includes at least one of Mn, Al, or a combination thereof.

For example, the positive electrode active material may be or include a high nickel-based positive electrode active material having a nickel amount greater than or equal to about 80 mol%, greater than or equal to about 85 mol%, greater than or equal to about 90 mol%, greater than or equal to about 91 mol%, or greater than or equal to about 94 mol% and less than or equal to about 99 mol% based on 100 mol% of the metal excluding lithium in the lithium transition metal composite oxide. The high-nickel-based positive electrode active material can realize high capacity and can be applied to a high-capacity, high-density rechargeable lithium battery.

The binder is configured to attach the positive electrode active material particles to each other, and to attach the positive electrode active material to the current collector. Non-limiting examples of the binder may include at least one of polyvinyl alcohol, carboxymethyl cellulose, hydroxypropyl cellulose, diacetyl cellulose, polyvinylchloride, carboxylated polyvinylchloride, polyvinyl fluoride, an ethylene oxide-containing polymer, polyvinylpyrrolidone, polyurethane, polytetrafluoroethylene, polyvinylidene fluoride, polyethylene, a polypropylene, styrene-butadiene rubber, a (meth)acrylated styrene-butadiene rubber, an epoxy resin, a (meth)acrylic resin, polyester resin, and nylon, but are not limited thereto.

The conductive material may provide electrode conductivity for the positive electrode, and any electrically conductive material may be used as a conductive material unless the electrically conductive materialcauses a chemical change. Non-limiting examples of the conductive material may include a carbon-based material such as at least one of natural graphite, artificial graphite, carbon black, acetylene black, Ketjen black, a carbon fiber, a carbon nanofiber, a carbon nanotube, and the like; a metal-based material of a metal powder or a metal fiber including at least one of copper, nickel, aluminum, silver, and the like; a conductive polymer such as a polyphenylene derivative; or a mixture thereof.

The current collector may include Al, but the current collector is not limited thereto.

### Electrolyte:

The electrolyte includes a non-aqueous organic solvent and a lithium salt.

The non-aqueous organic solvent constitutes a medium for transmitting ions taking part in the electrochemical reaction of a battery.

The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include at least one of methyl acetate, ethyl acetate, n-propyl acetate, dimethyl acetate, methyl propionate, ethyl propionate, decanolide, γ-butyrolactone, mevalonolactone, valerolactone, caprolactone, and the like.

The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. The ketone-based solvent may include cyclohexanone, and the like. The alcohol-based solvent may include ethanol, isopropyl alcohol, and the like. The aprotic solvent may include at least one of nitriles such as R-CN (wherein R is a C2 to C20 linear, branched, or cyclic hydrocarbon group, and may include a double bond, an aromatic ring, or an ether group, and the like); amides such as dimethylformamide; dioxolanes such as 1,3-dioxolane, 1,4-dioxolane, and the like; sulfolanes, and the like.

The non-aqueous organic solvent may be utilized alone or in a mixture of two or more types of solvents.

When using the carbonate-based solvent, a cyclic carbonate and a chain carbonate may be mixed, and the cyclic carbonate and the chain carbonate may be mixed in a volume ratio in a range of about 1:1 to about 1:9.

The electrolyte may further include at least one of vinylethyl carbonate, vinylene carbonate, difluoroethylene carbonate, chloroethylene carbonate, dichloroethylene carbonate, bromoethylene carbonate, dibromoethylene carbonate, nitroethylene carbonate, cyanoethylene carbonate, fluoroethylene carbonate, or a combination thereof as an additive.

The lithium salt dissolved in the organic solvent supplies lithium ions in a battery, enables an operation of a rechargeable lithium battery, and improves transportation of the lithium ions between positive and negative electrodes. Non-limiting examples of the lithium salt may include at least one of LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl) imide; LiFSI), LiC₄F₉SO₃, LiN(CₓF₂ₓ₊₁SO₂)(C_{y}F_{2y+1}SO₂) (wherein x and y are integers of about 1 to about 20), lithium trifluoromethane sulfonate, lithium tetrafluoroethane sulfonate, lithium difluoro (oxalato) borate (LiDFOB), lithium difluorobis(oxalato) phosphate (LiDFBOP), and lithium bis(oxalato) borate (LiBOB).

### Separator:

Depending on the type of the rechargeable lithium battery, a separator may be present between the positive electrode and the negative electrode. A suitable separator material may include at least one of polyethylene, polypropylene, polyvinylidene fluoride, and multi-layers thereof such as a polyethylene/polypropylene double-layered separator, a polyethylene/polypropylene/polyethylene triple-layered separator, and a polypropylene/polyethylene/polypropylene triple-layered separator.

The separator may include a porous substrate and a coating layer including an organic material, an inorganic material, or a combination thereof, on one surface, or on both surfaces, of the porous substrate.

The porous substrate may be or include a film formed of or including any one of polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, polytetrafluoroethylene (TEFLON), or a copolymer or mixture of two or more thereof.

The organic material may include a polyvinylidene fluoride-based polymer or a (meth)acrylic polymer.

The inorganic material may include inorganic particles such as or including at least one of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic material and the inorganic material may be mixed in one coating layer, or a coating layer including an organic material and a coating layer including an inorganic material may be stacked together.

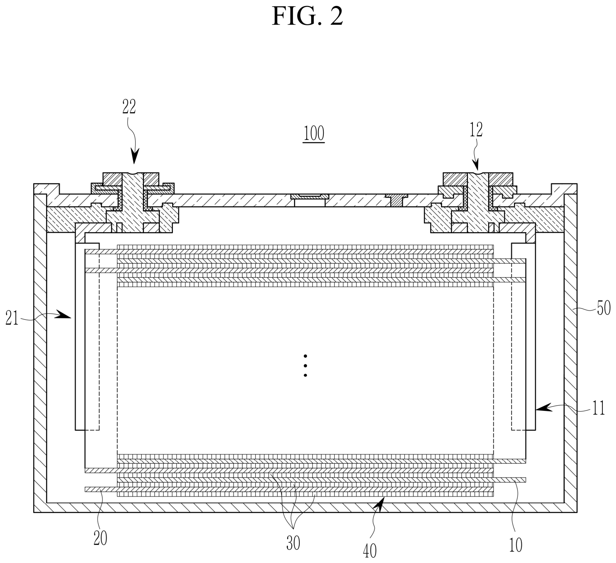

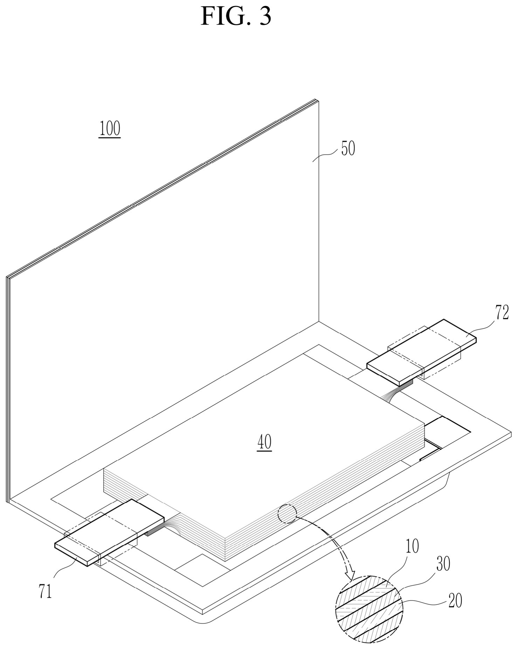

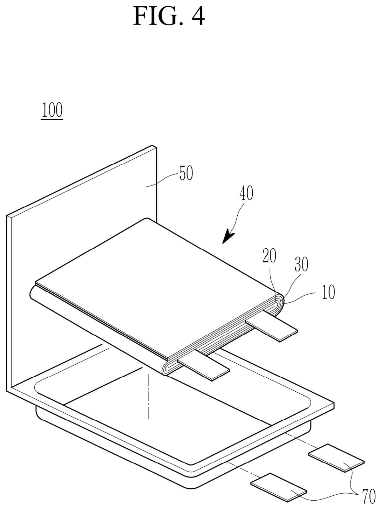

The rechargeable lithium battery may be classified into cylindrical, square, pouch, and coin types depending on its shape. FIGS. 1 to 4 are schematic views illustrating a rechargeable lithium battery according to some example embodiments. FIG. 1 shows a cylindrical battery, FIG. 2 shows a prismatic battery, and FIGS. 3 and 4 show pouch-type batteries. Referring to FIGS. 1 to 4, the rechargeable lithium battery 100 includes an electrode assembly 40 including a separator 30 between a positive electrode 10 and a negative electrode 20, and a case in which the electrode assembly 40 is included. The positive electrode 10, the negative electrode 20, and the separator 30 may be impregnated with an electrolyte (not shown). The rechargeable lithium battery 100 may include a sealing member 60 that seals the case 50 as shown in FIG. 1. In FIG. 2, the rechargeable lithium battery 100 may include a positive electrode lead tab 11, a positive electrode terminal 12 connected to the positive electrode lead tab 11, a negative electrode lead tab 21, and a negative electrode terminal 22 connected to the negative electrode lead tab 21. As shown in FIGS. 3 and 4, the rechargeable lithium battery 100 includes an electrode tab 70 illustrated in FIG. 4, or a positive electrode tab 71 and a negative electrode tab 72 illustrated in FIG. 3, the electrode tabs 70/71/72 forming an electrical path for inducing the current formed in the electrode assembly 40 to the outside of the rechargeable lithium battery 100.

The rechargeable lithium battery according to one or more example embodiments may be applicable to, e.g., automobiles, mobile phones, and/or various types of electric devices, but the present disclosure is not limited thereto.

Hereinafter, examples of the present disclosure and comparative examples are described. These examples, however, are not in any sense to be interpreted as limiting the scope of the disclosure.

### Example 1:

LiOH, polyethylene oxide (PEO), and polyethyleneimine (PEI) were mixed at a weight ratio of 40:30:30 to prepare an additive.

Polyacrylic acid (PAA), phytic acid (PA), and poly(3,4-ethylene dioxythiophene (PEDOT) were radical polymerized utilizing an ammonium persulfate (APS) initiator, filtrated, and dried to prepare a copolymer of polyacrylic acid (PAA), phytic acid (PA), and poly(3,4-ethylene dioxythiophene) (PEDOT) (a weight average molecular weight: 1,000,000 g/mol) as a self-healing binder. In the prepared self-healing binder, and amount of the polyacrylic acid was 70 wt% based on 100 wt% of the self-healing binder, an amount of the phytic acid was 20 wt% based on 100 wt% of the self-healing binder, and an amount of poly(3,4-ethylene dioxythiophene) was 10 wt% of 100 wt% of the self-healing binder.

95.5 wt% of a mixture of artificial graphite and the silicon-carbon composite as a negative electrode active material (a mixing ratio of artificial graphite and the silicon-carbon composite = 96:4 weight ratio), 1 wt% of carboxymethyl cellulose, 1.5 wt% of a styrene-butadiene rubber, 0.5 wt% of the additive, and 1.5 wt% of the self-healing binder were mixed in water to prepare a negative electrode active material slurry.

The silicon-carbon composite included aggregates that were secondary particles where artificial graphite and silicon were aggregated and a soft carbon coating layer formed on the aggregates, and herein, the amount of artificial graphite was 50 wt%, the amount of silicon nanoparticles was 30 wt%, and the amount of the amorphous carbon was 20 wt% based on the total amount of the silicon-carbon composite.

The negative electrode active material slurry was coated on a Cu foil current collector and dried at 110 °C followed by pressurizing the negative electrode active material slurry. Thereafter, the obtained product was additionally dried at 140 °C under a vacuum condition for 4 hours to prepare a negative electrode.

Using the negative electrode, a lithium metal counter electrode, and an electrolyte, a half-cell was fabricated. The electrolyte was 1.0 M LiPF₆ dissolved in a mixed solvent of ethylene carbonate, ethyl methyl carbonate, and dimethyl carbonate (30:50:20 volume ratio).

### Example 2:

A negative electrode and a half-cell were fabricated by substantially the same procedure as in Example 1, with a difference that 95.9 wt% of a mixture of artificial graphite and the silicon-carbon composite as a negative electrode active material (a mixing ratio of artificial graphite and the silicon-carbon composite = 96:4 weight ratio), 1 wt% of carboxymethyl cellulose, 1.5 wt% of a styrene-butadiene rubber, 0.1 wt% of the additive, and 1.5 wt% of the self-healing binder were mixed in water to prepare a negative electrode active material slurry.

### Example 3:

A negative electrode and a half-cell were fabricated by substantially the same procedure as in Example 1, with a difference that 95 wt% of a mixture of artificial graphite and the silicon-carbon composite as a negative electrode active material (a mixing ratio of artificial graphite and the silicon-carbon composite = 96:4 weight ratio), 1 wt% of carboxymethyl cellulose, 1.5 wt% of a styrene-butadiene rubber, 1 wt% of the additive, and 1.5 wt% of the self-healing binder were mixed in water to prepare a negative electrode active material slurry.

### Example 4:

A negative electrode and a half-cell were fabricated by substantially the same procedure as in Example 1, with a difference that LiOH, polyethylene oxide (PEO), and polyethyleneimine (PEI) were mixed at a weight ratio of 30:35:35 (i.e., 1: approximately 1.17: approximately 1.17) to prepare an additive.

### Example 5:

A negative electrode and a half-cell were fabricated by substantially the same procedure as in Example 1, with a difference that LiOH, polyethylene oxide (PEO), and polyethyleneimine (PEI) were mixed at a weight ratio of 50:25:25 (i.e., 1: 0.5:0.5) to prepare an additive.

### Example 6:

A negative electrode and a half-cell were fabricated by substantially the same procedure as in Example 1, with a difference that LiOH, polyethylene oxide (PEO), and polyethyleneimine (PEI) were mixed at a weight ratio of 45:35:20 (i.e., 1: approximately 0.78: approximately 0.4) to prepare an additive.

### Example 7:

A negative electrode and a half-cell were fabricated by substantially the same procedure as in Example 1, with a difference that LiOH, polyethylene oxide (PEO), and polyethyleneimine (PEI) were mixed at a weight ratio of 35:25:40 (i.e., 1: approximately 0.7: approximately 1.14) to prepare an additive.

### Example 8:

A negative electrode and a half-cell were fabricated by substantially the same procedure as in Example 1, with a difference that LiOH, polyethylene oxide (PEO), and polyethyleneimine (PEI) were mixed at a weight ratio of 45:20:35 (i.e., 1: approximately 0.4: approximately 0.78) to prepare an additive.

### Example 9:

A negative electrode and a half-cell were fabricated by substantially the same procedure as in Example 1, with a difference that LiOH, polyethylene oxide (PEO), and polyethyleneimine (PEI) were mixed at a weight ratio of 35:40:25 (i.e., 1: approximately 1.14: approximately 0.7) to prepare an additive.

### Comparative Example 1:

96 wt% of a mixture of artificial graphite and the silicon-carbon composite as a negative electrode active material (a mixing ratio of artificial graphite and the silicon-carbon composite = 96:4 weight ratio), 1 wt% of carboxymethyl cellulose, 1.5 wt% of a styrene-butadiene rubber, and 1.5 wt% of the self-healing binder were mixed in water to prepare a negative electrode active material slurry. The negative electrode active material slurry was coated on a Cu foil current collector and dried at 110 °C followed by pressurizing it. Thereafter, the obtained product was additionally dried at 140 °C under a vacuum condition for 4 hours to prepare a negative electrode. However, a uniform negative electrode was not prepared by the process. Consequently, fabrication of the cell was not feasible.

### Comparative Example 2:

A negative electrode active material slurry was prepared by substantially the same procedure as in Example 1, with a difference that an additive was used, which had been prepared by mixing LiOH, polyethylene oxide, and polyethyleneimine at a weight ratio of 20:40:40 (i.e., 1:2:2). The negative electrode active material slurry was coated on a Cu foil current collector and dried at 110 °C followed by pressurizing the negative electrode active material slurry. Thereafter, the obtained product was additionally dried at 140 °C under a vacuum condition for 4 hours to prepare a negative electrode. However, a negative electrode was not prepared by the process. Consequently, fabrication of the cell was not feasible.

### Comparative Example 3:

A negative electrode active material slurry was prepared by substantially the same procedure as in Example 1, with a difference that an additive was used, which had been prepared by mixing LiOH, polyethylene oxide, and polyethyleneimine at a weight ratio of 60:20:20 (i.e., 1: approximately 0.3: approximately 0.3). The negative electrode active material slurry was coated on a Cu foil current collector and dried at 110 °C followed by pressurizing the negative electrode active material slurry. Thereafter, the obtained product was additionally dried at 140 °C under a vacuum condition for 4 hours to prepare a negative electrode. However, a negative electrode was not prepared by the process. Consequently, fabrication of the cell was not feasible.

### Comparative Example 4:

A negative electrode and a half-cell were fabricated by substantially the same procedure as in Example 2, with a difference that an additive was used, which had been prepared by mixing LiOH, polyethylene oxide, and polyethyleneimine at a weight ratio of 50:40:10 (i.e., 1:0.8:0.2).

### Comparative Example 5:

A negative electrode was prepared by substantially the same procedure as in Example 2, with a difference that an additive was used, which had been prepared by mixing LiOH, polyethylene oxide, and polyethyleneimine at a weight ratio of 30:20:50 (i.e., 1: approximately 0.7: approximately 1.67).

A half-cell was fabricated by substantially the same procedure as in Example 1, with a difference that the negative electrode was utilized.

### Comparative Example 6:

A negative electrode was prepared by substantially the same procedure as in Example 2, with a difference that an additive was used, which had been prepared by mixing LiOH, polyethylene oxide, and polyethyleneimine at a weight ratio of 50:10:40 (i.e., 1:0.2:0.8).

A half-cell was fabricated by substantially the same procedure as in Example 1, with a difference that the negative electrode was utilized.

### Comparative Example 7:

A negative electrode was prepared by substantially the same procedure as in Example 2, with a difference that an additive was used, which had been prepared by mixing LiOH, polyethylene oxide, and polyethyleneimine at a weight ratio of 30:50:20 (i.e., 1: approximately 1.67: approximately 0.67).

A half-cell was fabricated by substantially the same procedure as in Example 1, with a difference that the negative electrode was utilized.

The compositions of the negative electrode according to Examples 1 to 9 and Comparative Examples 1 to 7 are summarized in Table 1 below.

**Table 1:**

| | Additive (weight ratio) | | | Amount of Additive (wt%) |
|---|---|---|---|---|
| | LiOH | PEO | PEI | |
| Example 1 | 40 | 30 | 30 | 0.5 |
| Example 2 | 40 | 30 | 30 | 0.1 |
| Example 3 | 40 | 30 | 30 | 1 |
| Example 4 | 30 | 35 | 35 | 0.5 |
| Example 5 | 50 | 25 | 25 | 0.5 |
| Example 6 | 45 | 35 | 20 | 0.5 |
| Example 7 | 35 | 25 | 40 | 0.5 |
| Example 8 | 45 | 20 | 35 | 0.5 |
| Example 9 | 35 | 40 | 25 | 0.5 |
| Comparative Example 1 | - | - | - | 0 |
| Comparative Example 2 | 20 | 40 | 40 | 0.5 |
| Comparative Example 3 | 60 | 20 | 20 | 0.5 |
| Comparative Example 4 | 50 | 40 | 10 | 0.5 |
| Comparative Example 5 | 30 | 20 | 50 | 0.5 |
| Comparative Example 6 | 50 | 10 | 40 | 0.5 |
| Comparative Example 7 | 30 | 50 | 20 | 0.5 |

### Experimental Example 1) Evaluation of emulsion index

The negative electrode slurries according to Examples 1 to 9 and Comparative Examples 1 to 7 were allowed to stand for three days, and the phase-separated region were evaluated, i.e., by measuring the height of the phase separated point. The emulsion index was calculated by dividing the measured height by the slurry height before standing. The results are shown in Table 2 below.

### Experimental Example 2) Evaluation of adhesive strength of negative electrode

The adhesive strength of the negative electrode according to Examples 1 to 9, and Comparative Examples 1 to 7 were measured through the following procedures.

A tape adhered to the slide glass was attached to the negative electrode active material layer, while the tape and the negative electrode active material layer was peeled off using a 180° universal testing machine (UTM) tensile strength tester to measure an adhesion strength. Herein, a peeling speed was set to 100 mm/min, and the adhesion strength was measured three (3) times to calculate an average value of strength required to peel 40 mm. The results are shown in Table 2 below.

### Experimental Example 3) Evaluation of occurrence of electrolyte side reaction

The electrolyte side reactions of the negative electrodes according to Examples 1 to 9, and Comparative Examples 1 to 7 were confirmed by observing cell expansion due to gas generation. After formation charge and discharge, cases where the cell expansion was visually observed are marked as "○," and cases where no expansion was observed are marked, as "X," as shown in Table 2 below.

### Experimental Example 4) Evaluation of the separation rate of the fully-charged negative electrode

The half-cells according to Examples 1 to 9, and Comparative Examples 1 to 7 were fully charged at 4.2 V, 0.1 C, and a 0.02 C cut-off. The negative electrode after charging was separated.

By comparing the area of the negative electrode before charging with the area remaining attached to the current collector after charging, cases where the value was less than 90 % were marked as separation occurred (○), and cases where the value was 90 % or more were marked as no separation (X), as shown in Table 2 below.

### Experimental Example 5) Evaluation of cell resistance

The resistance of the half-cells according to Examples 1 to 9 and Comparative Examples 1 to 7 was evaluated using direct-current internalresistance (DC-IR). For resistance measurement, the cell was charged and discharged at 0.5 C under a SOC50 (charged to be 50 % of charge capacity based on 100 % of total battery charge capacity), and then discharged at 1 C for 10 seconds under a SOC50. The resistance was measured for the cells that underwent the above charge and discharge process.

The results are shown in Table 2 below.

**Table 2:**

| | Emulsion index (%) | Adhesive strength (gf/mm) | Occurrence of electrolyte side reaction | Separation occurrence of fully-charged negative electrode | Battery resistance (mΩ) |
|---|---|---|---|---|---|
| Example 1 | 100 | 1.56 | X | X | 90.2 |
| Example 2 | 92 | 1.15 | X | X | 92.5 |
| Example 3 | 91 | 1.12 | X | X | 88.1 |
| Example 4 | 92 | 1.20 | X | X | 89.5 |
| Example 5 | 94 | 1.40 | X | X | 93.8 |
| Example 6 | 98 | 1.42 | X | X | 89.9 |
| Example 7 | 94 | 1.27 | X | X | 95.1 |
| Example 8 | 98 | 1.47 | X | X | 95.9 |
| Example 9 | 95 | 1.38 | X | X | 88.4 |
| Comparative Example 1 | 78 | Fabrication of negative electrode and cell could not be fabricated | | | |
| Comparative Example 2 | 85 | Fabrication of negative electrode and cell could not be fabricated | | | |
| Comparative Example 3 | 89 | Fabrication of negative electrode and cell could not be fabricated | | | |
| Comparative Example 4 | 92 | 1.05 | X | X | 101.2 |
| Comparative Example 5 | 92 | 1.15 | O | X | Cell evaluation was not possible |
| Comparative Example 6 | 93 | 1.20 | X | X | 105.3 |
| Comparative Example 7 | 91 | 1.01 | X | O | Cell evaluation was not possible |

As shown in Table 2, the negative electrodes of Examples 1 to 9 exhibited desired or improved adhesive strength, no electrolyte side-reaction, and no negative electrode separation during full charge. Further, the negative electrodes of Examples 1 to 9 showed low cell resistance.

In contrast, Comparative Example 1, in which no additive was used, the negative electrode and the cell could not be fabricated. Comparative Examples 2 and 3, which used the additives with inappropriate mixing ratio of LiOH, PEO, and PEI, failed to fabricate negative electrode and cell and Comparative Example 4 exhibited low adhesive strength and remarkably high cell resistance. Comparative Example 5 exhibited electrolyte side reaction occurred, and thus, the cell evaluation could not be performed. Comparative Example 6 showed extremely high cell resistance, and Comparative Example 7 exhibited low adhesive strength and negative electrode separation during full charge, and thus, the evaluation of the cell could not be conducted.

While this disclosure has been described in connection with what is presently considered to be practical example embodiments, it is to be understood that the disclosure is not limited to the disclosed embodiments. On the contrary, the disclosure is intended to cover various modifications and equivalent arrangements included within the spirit and scope of the appended claims.

## Claims

1. A negative electrode for a rechargeable lithium battery, the negative electrode comprising:
a negative electrode active material layer comprising a negative electrode active material, an additive, and a binder;
wherein the additive comprises MOH, wherein M comprises an alkali metal, a polymer comprising a R-O repeating unit, wherein R comprises a substituted or unsubstituted alkylene group, or a phenylene group, and an ammonium group-including cation polymer at a weight ratio in a range of about 1: about 0.4 to about 1.5: about 0.4 to about 1.5.

2. The negative electrode for a rechargeable lithium battery of claim 1, wherein the M comprises at least one of Li, Na, and a combination thereof.

3. The negative electrode for a rechargeable lithium battery of claim 1 or 2, wherein the polymer comprising the R-O repeating unit is represented by Chemical Formula 1; 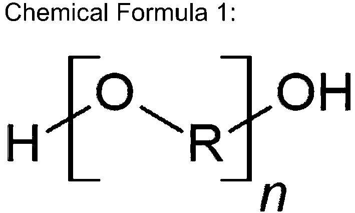 wherein:
R is a substituted or unsubstituted alkylene group, or a phenylene group, and
n is an integer in a range of about 1 to about 200000, preferably wherein the polymer comprising the R-O repeating unit comprises at least one of polyethylene oxide, polypropylene oxide, polyphenylene oxide, and a combination thereof.

4. The negative electrode for a rechargeable lithium battery of any of claims 1 to 3, wherein the ammonium group-including cation polymer comprises at least one of polyethylene imine, poly (diallyldimethylammonium chloride), poly (allylamine hydrochloride), poly (4-vinylbenzyltrimethylammonium)chloride, and a combination thereof.

5. The negative electrode for a rechargeable lithium battery of any of claims 1 to 4, wherein the negative electrode active material comprises a silicon-based negative electrode active material.

6. The negative electrode for a rechargeable lithium battery of any of claims 1 to 5, wherein an amount of the additive is about 0.1 wt% or more and about 1.0 wt% or less based on 100 wt% of the negative electrode active material layer.

7. The negative electrode for a rechargeable lithium battery of any of claims 1 to 6, wherein the binder comprises at least one of a self-healing binder, an aqueous binder, a non-aqueous binder, and a combination thereof, preferably wherein the binder comprises the self-healing binder and/or wherein the binder comprises the self-healing binder and the aqueous binder.

8. The negative electrode for a rechargeable lithium battery of claim 7, wherein the self-healing binder comprises a copolymer including at least one of a polymer electrolyte, a conductive polymer, and a polydentate chelating agent.

9. The negative electrode for a rechargeable lithium battery of claim 7, wherein the binder comprises a self-healing binder comprising a copolymer comprising the polymer electrolyte, the conductive polymer, the polydentate chelating agent, and the aqueous binder.

10. The negative electrode for a rechargeable lithium battery of claim 8 or 9, wherein the polymer electrolyte comprises at least one functional group including at least one of a carbonyl group, an undissociated functional group (RH), a carboxylic acid group, a sulfonic acid group, a phosphoric acid group, an ether group, and an amine group.

11. The negative electrode for a rechargeable lithium battery of any of claims 8 to 10, wherein the polymer electrolyte comprises at least one of poly (2-acrylamido-2-methyl-1-propanesulfonic acid), polyacrylic acid, poly(meth)acrylic acid and combination thereof.

12. The negative electrode for a rechargeable lithium battery of any of claims 8 to 11, wherein the conductive polymer comprises at least one of poly (3,4-ethylenedioxythiophene), polyaniline, polypyrrole, polyfuran, polythiophene, polyselenophene, 3,4-propylenedioxythiophene-2,5-dicarboxylic acid (ProDOT), and a combination thereof.

13. The negative electrode for a rechargeable lithium battery of any of claims 8 to 12, wherein the polydentate chelating agent has 2 to 6 acidic functional groups or basic functional groups, preferably wherein one of the acidic functional groups or one of the basic functional groups comprises at least one of a carboxylic acid group, a sulfonic acid group, an amine group, a phosphoric acid group, and a hydroxy group.

14. The negative electrode for a rechargeable lithium battery of any of claims 8 to 13, wherein the polydentate chelating agent comprises at least one of phytic acid, tannic acid, and a combination thereof.

15. A rechargeable lithium battery, comprising:
the negative electrode of any of claims 1 to 14;
a positive electrode; and
an electrolyte.
